# EUROPÄISCHE PATENTSCHRIFT

(11) **EP 2 788 168 B1**
(45) Veröffentlichungstag und Bekanntmachung des Hinweises auf die Patenterteilung: **02.01.2019**
(21) Anmeldenummer: 12794265.4
(22) Anmeldetag: 22.11.2012
(51) Int. Cl.: B29C 65/48, F16L 47/02, C08J 5/12, C09J 5/00, C09J 4/06, C09J 133/06, B29L 23/00, B29C 65/52

(54) **VERFAHREN ZUM STOFFSCHLÜSSIGEN VERBINDEN VON KUNSTSTOFF-ROHREN MIT (METH)ACRYLAT-KLEBSTOFF UND ROHRVERBUND**
PROCESSES FOR THE ADHESIVE BONDING OF PLASTICS PIPES BY MEANS OF (METH)ACRYLATE ADHESIVE AND TUBE BOND
PROCÉDÉS D'ASSEMBLAGE PAR LIAISON DE MATIÈRE DE TUBES EN MATIÈRE PLASTIQUE AU MOYEN D'UN ADHÉSIF (MÉTH)ACRYLATE ET ASSEMBLAGE DE TUBES

(30) Priorität: 09.12.2011 DE 102011088123
(43) Veröffentlichungstag der Anmeldung: 15.10.2014
(73) Patentinhaber: Henkel AG & Co. KGaA, 40589 Düsseldorf (DE); Henkel IP & Holding GmbH, 40589 Düsseldorf (DE)
(72) Erfinder: BEUER, Bernd, 40789 Monheim (DE); SCHÖTTMER, Bernhard, 40789 Monheim (DE); KNEAFSEY, Brendan, Lucan (IE)
(86) Internationale Anmeldenummer: PCT/EP2012/073291
(87) Internationale Veröffentlichungsnummer: WO 2013/083406

(56) Entgegenhaltungen:
- US-A- 3 276 929
- US-A- 4 200 480
- US-A- 5 656 345
- US-A1- 2009 173 441

## Beschreibung

Die vorliegende Erfindung betrifft Verfahren zum stoffschlüssigen Verbinden von Kunststoff-Rohren sowie einen Rohrverbund aus mindestens zwei Kunststoff-Rohren.

Bei der Verklebung von Kunststoff-Rohren, beispielsweise von PVC-Druckrohren sind solche Verklebungsmittel gebräuchlich, die festes Polymer, gelöst in einem geeigneten Lösungsmittel oder Lösungsmittelsystem enthalten. Das Klebeprinzip beruht auf dem Quell-, Löse- und Diffusionsvermögen der Lösungsmittel. Die Lösungsmittel diffundieren in das Grundmaterial, quellen es an und führen unter Mitwirkung des gelöst eingebrachten Polymeranteils bei der Verpressung der Fügeteile zum Verbund. Über einen nicht exakt zu definierenden Zeitraum desorbieren die Lösungsmittel, so dass eine homogene Verbindung erreicht wird. Dieses Prinzip der Rohrklebetechnik wird z.B. in der Europäischen Patentanmeldung EP 0 197 481 A2 beschrieben.

Diese Rohrklebetechnik führt zu sehr guten Ergebnissen, jedoch gibt es ein generelles Bestreben, Möglichkeiten zu etablieren, ohne lösemittelbasierte Verklebungsmittel auskommen. In der internationalen Patentanmeldung WO 2009/108751 A1 wird vor diesem Hintergrund vorgeschlagen, PVC-Rohre mit Hilfe eines bei Raumtemperatur härtbaren Klebstoffs zu verbinden, welcher eine Mischung aus Epoxid-Harz und Härtungsmittel, umfassend einen Blend aus Polyamid und Polyamin, enthält.

US 3276929 offenbart reaktive zweikomponentige Klebstoffzusammensetzungen zur stoffschlüssigen Verbindung von Rohren, die flüssige ungesättigte Monomere wie Styrol und Methylmethacrylate neben Elastomeren enthalten.

US 4200480 offenbart Zusammensetzungen von Elastomeren zur Verklebung von Kunststoffrohren enthaltend eine Mischung von polymerisierbaren Acrylat- und Acrylsäure-Monomeren, wobei als solche Acrylate und Acrylsäuren beispielhaft Ester der (Meth)acrylsäure und deren freie Säuren genannt sind.

US 5656345 offenbart Zusammensetzungen von Elastomeren zur Verklebung von Kunststoffrohren. Die Klebstoffe der US'345 enthalten neben dem Elastomer ein reaktives Lösemittel, das selbst polymerisierbar ist, und vorzugsweise überwiegend aus Methylmethacrylat besteht.

US 2009/0173441 offenbart reaktive zweikomponentige Klebstoffzusammensetzungen zur stoffschlüssigen Verbindung von Rohren, die insbesondere ein Acrylatmonomer enthalten.

Das Anliegen der vorliegenden Erfindung war es, einen Rohrverbund bereitzustellen, der ohne den Einsatz lösemittelbasierter Verklebungsmittel auskommt und dazu eine bessere Festigkeit, insbesondere Scherfestigkeit, der Klebeverbindung aufweist.

Hierbei konnte überraschend gefunden werden, dass in Verfahren zum stoffschlüssigen Verbinden von Kunststoff-Rohren mit oder ohne Fitting der Einsatz von (Meth)acrylat-Klebstoff zu sehr guten Resultaten führt.

Dementsprechend ist ein erster Gegenstand der Erfindung ein Verfahren zum stoffschlüssigen Verbinden von Kunststoff-Rohren mittels Fitting, wobei (a) auf die Fügeoberfläche des Fittings und/oder auf die Fügeoberflächen der damit zu verbindenden Rohrenden ein Klebstoff aufgebracht wird, und danach (b) Rohre und Fitting zusammengeschoben werden, und danach (c) Aushärtenlassen des Klebstoffes erfolgt, dadurch gekennzeichnet, dass als Klebstoff ein (Meth)acrylat-Zweikomponentenklebstoff eingesetzt wird, wobei in dem gesamten (Meth)acrylat-Zweikomponentenklebstoff (i) zumindest drei unterschiedliche polymerisierbare Monomerkomponenten auf (Meth)acrylatbasis eingesetzt werden, umfassend a) Methylmethacrylat, in Mengen von 20-70 Gew.-%, bezogen auf die Gesamtzusammensetzung, b) Methacrylat mit polarer Gruppe, ausgewählt aus Cyclohexylmethacrylat, Tetrahydrofurfurylmethacrylat, Hydroxyethylmethacrylat, Hydroxypropylmethacrylat, t-Butylaminoethylmethacrylat, Cyanoethylmethacrylat, und Chloroethylmethacrylat, insbesondere aber Hydroxyethylmethacrylat und/oder Hydroxypropylmethacrylat, in Mengen von 5-30 Gew.-%, bezogen auf die Gesamtzusammensetzung, und (c) eine saure Monomerkomponente, insbesondere Methacrylsäure, in Mengen von 0,5 bis 10 Gew.-%, bezogen auf die Gesamtzusammensetzung.

Insbesondere wird in Schritt (a) gemäß einer bevorzugten Ausführungsform sowohl auf die Fügeoberfläche des Fittings als auch auf die Fügeoberflächen der damit zu verbindenden Rohrenden ein Klebstoff aufgebracht.

Mit dem Begriff "Fitting" werden die Verbindungsstücke einer Rohrleitung bezeichnet. Diese Verbindungsstücke ermöglichen z.B. die (insbesondere gerade) Verbindung von Rohrstücken, aber auch Rohrverbindungen unter Richtungswechsel oder Durchmesserwechsel sowie die Verbindung zu Einbauteilen. Der Einsatz von Fittings ermöglicht insbesondere die einfache Anpassung des Rohrleitungsverlaufs an die äußeren Gegebenheiten, also z.B. das Umgehen von Hindernissen, die Ausführung von Verzweigungen und Durchmesserwechsel usw. Der Verlauf einer Rohrleitung kann den konstruktiven Erfordernissen somit einfach angepasst werden. Der Begriff "Fitting" ist überall in der Rohrleitungsplanung als auch in der Installationstechnik gebräuchlich. Im Sinne der Erfindung werden vorzugsweise Kunststoff-Fittings eingesetzt.

Ein zweiter Gegenstand der vorliegenden Erfindung ist weiterhin ein Verfahren zum stoffschlüssigen Verbinden von Kunststoff-Rohren, wobei die Rohrverbindung durch Zusammenschieben eines ersten Rohrendes mit einem zweiten Rohrende erzielt wird, wobei das eine Rohrende einen Aufnahmerohrteil und das andere Rohrende einen Einsteckrohrteil darstellt, wobei vor dem Zusammenschieben der Rohrenden auf zumindest eine der miteinander zu verbindenden Fügeteiloberflächen ein Klebstoff aufgebracht wird und nach dem Zusammenschieben ein Aushärtenlassen des Klebstoffes erfolgt, dadurch gekennzeichnet, dass als Klebstoff ein (Meth)acrylat- Zweikomponentenklebstoff eingesetzt wird, wobei in dem gesamten (Meth)acrylat-Zweikomponentenklebstoff (i) zumindest drei unterschiedliche polymerisierbare Monomerkomponenten auf (Meth)acrylatbasis eingesetzt werden, umfassend a) Methylmethacrylat, in Mengen von 20-70 Gew.-%, bezogen auf die Gesamtzusammensetzung, b) Methacrylat mit polarer Gruppe, ausgewählt aus Cyclohexylmethacrylat, Tetrahydrofurfurylmethacrylat, Hydroxyethylmethacrylat, Hydroxypropylmethacrylat, t-Butylaminoethylmethacrylat, Cyanoethylmethacrylat, und Chloroethylmethacrylat, insbesondere aber Hydroxyethylmethacrylat und/oder Hydroxypropylmethacrylat, in Mengen von 5-30 Gew.-%, bezogen auf die Gesamtzusammensetzung, und (c) eine saure Monomerkomponente, insbesondere Methacrylsäure, in Mengen von 0,5 bis 10 Gew.-%, bezogen auf die Gesamtzusammensetzung.

Die erfindungsgemäßen Verfahren bieten eine Reihe vor Vorteilen. Zum ersten werden dauerhaft stabile, hochfeste Rohrverbindungen ermöglicht, welche eine Lebensdauer aufweisen, die der Lebensdauer eines Rohres entspricht und welche den allgemein üblichen Güte- und Prüfanforderungen, wie sie insbesondere auch für Druckrohrleitungen gelten, entsprechen. Die über die erfindungsgemäßen Verfahren erzielbare Klebeverbindung weist eine sehr gute Lichtbeständigkeit, eine sehr gute Lösemittelbeständigkeit, eine sehr gute Hydrolysebeständigkeit, sehr gute Tief- und Hochtemperaturbeständigkeit und eine sehr gute Schlagzähigkeit auf. Insbesondere ist eine sehr gute Scherfestigkeit der Klebeverbindung erzielbar. Die Scherfestigkeit im Sinne der vorliegenden Erfindung kann insbesondere nach DIN EN ISO 9311-2 getestet werden. Diese Norm legt ein Verfahren zur Charakterisierung von Klebstoffen für thermoplastische Rohrleitungssysteme fest, indem die Scherfestigkeit einer geklebten Fügeverbindung an einer entsprechend vorbereiteten Probe ermittelt wird. Ein besonderer Vorteil der erfindungsgemäßen Verbindungstechnik ist ein besonders schneller Festigkeitsaufbau unter üblichen Aushärtebedingungen (z.B. bei Raumtemperatur 20°C), insbesondere bezogen auf die Scherfestigkeit, womit eine schnellere Inbetriebnahme von Anlagen ermöglicht wird. Der Klebstoff ist problemlos applizierbar, z.B. über Statikmischer. Die beiden erfindungsgemäßen Verfahren unterscheiden sich nur dadurch, dass im ersten Verfahren die Rohre über Fittings miteinander verbunden werden und im zweiten Verfahren die Rohre unmittelbar miteinander verbunden werden.

Das Aufbringen des Klebstoffs kann in den erfindungsgemäßen Verfahren prinzipiell auf jede mögliche Weise erfolgen. Es ist aber bevorzugt, dass das Aufbringen des Klebstoffs mit Hilfe eines Auftragswerkzeuges, insbesondere durch Pinselauftrag erfolgt. Dadurch kann ein besonders gleichmäßiger Auftrag in gewünschter adäquater Dicke erreicht werden.

Das Aushärtenlassen des Klebstoffes findet insbesondere bei Umgebungstemperatur statt, welche je nach klimatischer Situation vorzugsweise etwa 10 bis 35°C, beispielsweise 20°C beträgt. Bereits eine Stunde nach der Verklebung ist eine sehr gute Festigkeit der Klebeverbindung erreicht.

Um eine besonders gute Verbindung der Kunststoff-Rohre mit oder ohne Fitting im Sinne der Erfindung zu erzielen, ist es im Sinne einer bevorzugten Ausführungsform der Erfindung von Vorteil, wenn die Klebstoff-Filmstärke auf der Fügeteiloberfläche vor dem Zusammenfügen im Bereich 0,1 mm bis 3 mm, vorzugsweise 0,2 mm bis 1,5 mm, insbesondere 0,2 mm bis 0,6 mm liegt. Diese Klebstoff-Filmstärken führen in Verbindung mit dem eingesetzten (Meth)acrylat-Klebstoff zu Rohrklebungen mit ganz besonders hoher Lebensdauer. Überraschenderweise konnten durch die gute Gleitwirkung des Klebstoffes auch Durchmesserspalte von - 0,2 mm gefügt werden.

Durch das Zusammenschieben von Rohr und Fitting oder Rohr und Rohr wird im Sinne der Erfindung die Klebeverbindung zwischen den Fügeteiloberflächen ermöglicht. Um eine ganz besondere dauerhaft sichere Rohrverbindung hervorbringen zu können, ist das erfindungsgemäße Verfahren im Sinne einer bevorzugten Ausführungsform vorteilhafterweise so auszuführen, dass das Zusammenschieben von Rohr und Fitting oder Rohr und Rohr ohne Verdrehen erfolgt.

Zwar lassen sich auch hervorragend dauerhaft sichere Rohrverbindungen im Sinne der vorliegenden Erfindung selbst dann hervorbringen, wenn das Zusammenschieben von Rohr und Fitting oder Rohr und Rohr unter Verdrehen erfolgt, denn es ist ein besonderer Vorteil der vorliegenden Erfindung, dass die erfindungsgemäß einzusetzenden (Meth)acrylat-Klebstoffe eine vergleichsweise lange Offenzeit (im Vergleich zu Lösemittel-basierten Klebern) und damit Verarbeitungszeitspanne aufweisen, welche auch Korrekturen oder Verdrehen beim Zusammenschieben von Rohr und Fitting oder Rohr und Rohr erlaubt, jedoch können sogar noch bessere Resultate erzielt werden, wenn ein Verdrehen vermieden wird. Die vergleichsweise lange Offenzeit ermöglicht zudem die problemlose Klebung von Rohren mit großen Durchmessern, also von Durchmessern größer 400 mm.

Das erfindungsgemäße Verfahren ist grundsätzlich geeignet, Kunststoff-Rohre jeder Art sicher zu verbinden. Gemäß einer besonderen Ausführungsform der Erfindung handelt es sich bei den zu verbindenden Kunststoff-Rohren um solche auf Basis thermoplastischer Kunststoffe, insbesondere auf Basis PVC (vorzugsweise PVC-U oder PVC-C), ABS (Acrylnitril-Butadien-Styrol-Copolymerisat), ASA (Acrylester-Styrol-Acrylnitril- Copolymerisat), ABS/ASA und/oder PET (Polyethylenterephthalat). Die Fittings liegen vorzugsweise ebenfalls auf Basis thermoplastischer Kunststoffe vor, insbesondere auf Basis der zuvor genannten.

PVC-C ist das Kurzzeichen nach DIN EN ISO 1043-1: 2002-06 für chloriertes Polyvinylchlorid. Chloriertes Polyvinylchlorid ist herstellbar durch Chlorierung von Polyvinylchlorid (PVC) im Wirbelbett-, Dispersions- oder Lösungsverfahren und wird gewöhnlich als farbloses Pulver mit einem Chlor-Gehalt von ca. 62-73 % und einer Dichte von ca. 1,5-1,58 g/cm³ vermarktet. Durch die Chlorierung werden insbesondere die Thermostabilität und Wärmeformbeständigkeit des Polyvinylchlorids erhöht.

PVC-U ist das Kurzzeichen nach DIN EN ISO 1043-1: 2002-06 für Hart-PVC, welches Gehalte an Weichmachern von 0-12 Gew.-% aufweisen kann. Insbesondere sind erfindungsgemäß zu verklebende Kunststoff-Rohre auf Basis PVC-U weichmacherfrei. Im Gegensatz dazu weist Weich-PVC Gehalte an Weichmachern >12 Gew.-% auf.

Der erfindungsgemäße Einsatz des (Meth)acrylat-Klebstoffs führt insbesondere bei den vorgenannten Kunststoff-Rohren auf Basis thermoplastischer Kunststoffe zu Rohrverbindungen von exzellenter Qualität und dauerhafter Belastbarkeit.

Ein besonderer Vorzug der vorliegenden Erfindung ist es, dass die zu verbindenden Fügeteile auch aus unterschiedlichen Kunststoff-Materialien bestehen können und dennoch dauerhaft sichere Rohrverbindungen ermöglicht werden. Somit entspricht es auch einer bevorzugten Ausführungsform der vorliegenden Erfindung, wenn die Fügeteile aus unterschiedlichen Kunststoff-Materialien bestehen.

Ein weiterer besonderer Vorzug der vorliegenden Erfindung liegt darin, dass diese eine Klebeverbindung ermöglicht, welche den Bedarf an Lösungsmittel minimiert oder sogar ausschließt.

Das Klebeprinzip üblicher Verklebungsmittel für Rohrklebungen beruht, wie eingangs dargestellt, oft auf dem Quell-, Löse- und Diffusionsvermögen der eingesetzten Lösemittel. Erfindungsgemäß ist es dagegen bevorzugt, wenn der eingesetzte Klebstoff weniger als 10 Gew.-%, vorzugsweise weniger als 5 Gew.-%, insbesondere weniger als 2 Gew.-% oder gar kein Lösungsmittel enthält. Eine Reduktion des Lösungsmittelanteils dient nicht zuletzt dem Arbeitsschutz. Reaktive Monomere im Sinne der Erfindung sind im Kontext der Erfindung keine Lösungsmittel.

Der erfindungsgemäß einzusetzende Klebstoff ist ein (Meth)acrylat-Klebstoff.

(Meth)acrylat-Klebstoffe im Sinne dieser Erfindung sind Klebstoffe, welche Acrylsäure und/oder Methacrylsäure und/oder deren Ester umfassen. Erfindungsgemäß handelt es sich um zweikomponentige Klebstoffe. (Meth)acrylat-Klebstoffe im Sinne dieser Erfindung sind zweikomponentige Reaktionsklebstoffe, welche Methacrylsäuremethylester (Methylmethacrylat) umfassen. Dabei sind solche (Meth)acrylat-Klebstoffe bevorzugt, bei welchen das reaktive Monomersystem zumindest 10 Gew.-% Methylmethacrylat, vorzugsweise zumindest 20 Gew.-% Methylmethacrylat, insbesondere zumindest 30 Gew.-% Methylmethacrylat umfasst, Gew.-% jeweils bezogen auf das gesamte reaktive Monomersystem. Weiterhin sind solche (Meth)acrylat-Klebstoffe bevorzugt, bei welchen das reaktive Monomersystem zumindest 40 Gew.-% Methylmethacrylat, vorzugsweise zumindest 50 Gew.-% Methylmethacrylat, insbesondere zumindest 60 Gew.-% Methylmethacrylat umfasst, Gew.-% jeweils bezogen auf das gesamte reaktive Monomersystem. Die in dem (Meth)acrylat-Klebstoff eingesetzten Monomere, wie insbesondere das Methylmethacrylat, können durch radikalische Kettenreaktion polymerisiert werden.

Zum Start der Polymerisationsreaktion wird ein reaktives Radikal benötigt, das meist aus einem Peroxid hervorgeht, wenn man diesem einen Beschleuniger zusetzt. Geeignete Peroxide, wie z.B. Dibenzoylperoxid, und geeignete Beschleuniger, wie z.B. tertiäre aromatische Amine, wie insbesondere das Dimethyl-p-toluidin, sind an sich bekannt.

Die Verarbeitung von (Meth)acrylatsystemen kann z.B. so erfolgen, dass in einer ersten Komponente A wenigstens eine polymerisierbare Monomerkomponente auf (Meth)acrylatbasis sowie der Härter enthalten sind und in einer zweiten Komponente B wenigstens eine polymerisierbare Monomerkomponente auf (Meth)acrylatbasis sowie eine katalytische Komponente zur Katalysierung der Härtungsreaktion (der sogenannte Beschleuniger) enthalten sind. Die Komponenten A und B können vor dem Auftragen auf die Fügeteile in den erforderlichen Anteilen gemischt und danach auf die Fügeteile dosiert werden. Das Mischen erfolgt insbesondere mit einem Statikmischer. Ebenso ist es aber ohne weiteres möglich, die Komponenten auch unmittelbar auf die Fügeteile zu applizieren und die notwendige Mischung durch den Anpreßdruck der Fügeteile zu bewirken, was insbesondere mit Blick auf das erfindungsgemäße Verfahren vorteilhaft, weil arbeitserleichternd ist.

Das Monomersystem umfasst Methylmethacrylat. Bezogen auf die gesamte Klebstoffzusammetzung ist das Methylmethacrylat in Mengen von 20-70 Gew.-%, insbesondere 30-60 Gew.-% enthalten.

Außerdem werden acidische Monomere zusätzlich eingesetzt, insbesondere Methacrylsäure, in einer Gesamtmenge von 0,5-10 Gew.-%, insbesondere 1-5 Gew.-%, bezogen auf die gesamte Klebstoffzusammetzung. Der Zusatz des acidischen Monomers, insbesondere von Methacrylsäure, verbessert im Zusammenspiel mit den übrigen Bestandteilen des Klebstoffs insbesondere die Wärmestandfestigkeit der Rohrverklebung, aber auch das Abbindeverhalten und ebenso die Haftungseigenschaften zu den Rohrmaterialien sowie die Zugfestigkeit. Der Einsatz von Methacrylsäure ist daher mit großen Vorteilen für die Erfindung.

Erfindungsgemäß werden in der Gesamtzusammensetzung, also in dem gesamten (Meth)acrylat-Zweikomponentenklebstoff, (i) zumindest drei unterschiedliche polymerisierbare Monomerkomponenten auf (Meth)acrylatbasis eingesetzt, umfassend
a) Methylmethacrylat, in Mengen von 20-70 Gew.-%, bezogen auf die Gesamtzusammensetzung,
b) Methacrylat mit polarer Gruppe, ausgewählt aus Cyclohexylmethacrylat, Tetrahydrofurfurylmethacrylat, Hydroxyethylmethacrylat, Hydroxypropylmethacrylat, t-Butylaminoethylmethacrylat, Cyanoethylmethacrylat, und Chloroethylmethacrylat, insbesondere aber Hydroxyethylmethacrylat und/oder Hydroxypropylmethacrylat, in Mengen von 5-30 Gew.-%, bezogen auf die Gesamtzusammensetzung,
   und
(c) eine saure Monomerkomponente, insbesondere Methacrylsäure, in Mengen von 0,5 bis 10 Gew.-%, bezogen auf die Gesamtzusammensetzung.

Ein besonders bevorzugtes Beispiel für ein Methacrylat mit polarer Gruppe ist das HydroxyEthyl-Methacrylat-Monomer, welches z.B. als Mhoromer BM 905 von Evonik erhältlich ist.

In einer weiteren bevorzugten Ausführungsform umfasst die Gesamtzusammensetzung
a) Methylmethacrylat in Mengen von 30-60 Gew-%,
b) Hydroxyethylmethacrylat und/oder Hydroxypropylmethacrylat in einer Gesamtmenge von 5-15 Gew.-%,
c) Methacrylsäure in Mengen von 0,5 bis 10 Gew.-%, vorzugsweise 1-5 Gew.-%,
d) eine oder mehrere Komponenten zur Verbesserung der Schlagzähigkeit, insbesondere umfassend chlorsulfoniertes Polyethylen und/oder Styrol-Acrylnitril-Butadien-Copolymer, in einer Gesamtmenge von 5 bis 70 Gew.-%, vorzugsweise 10-60 Gew.-%,
e) Härtungsmittel auf Peroxidbasis in einer Gesamtmenge von 0,1 bis 5 Gew.-%,
f) katalytische Komponente(n) zur Katalysierung der Härtungsreaktion, vorzugsweise in einer Gesamtmenge von 0,01 bis 5 Gew.-%,
g) Stabilisator in einer Gesamtmenge von 0,1 bis 15 Gew.-%,
h) optional Verdickungsmittel, vorzugsweise pyrogene Kieselsäuren, vorzugsweise in einer Gesamtmenge von 0,1 bis 30 Gew.-%,
wobei die Gew.-%-Angabe jeweils auf die Gesamtzusammensetzung bezogen ist. Selbstverständlich können alle erfindungsgemäß einsetzbaren (Meth)acrylat-Klebstoffe je nach Bedarf weitere optionale Komponenten enthalten.

Im Rahmen einer weiteren bevorzugten Ausführungsform können als polymerisierbare Monomerkomponenten zusätzlich di- oder höherfunktionale Monomere, wie z.B. Ethylenglykoldimethacrylat, Propylenglykoldimethacrylat und/oder 1,1,1-Trimethylolpropantrimethacrylat eingesetzt werden. Dies verbessert insbesondere die Wärmestandfestigkeit der Rohrverklebung. Bezogen auf die gesamte Zusammensetzung kann die Gesamtmenge solcher di- oder höherfunktionaler Monomere z.B. bei 0 bis 20 Gew.-%, vorzugsweise 0,1-10 Gew.-%, insbesondere 0,1-5 Gew.-%, bezogen auf die Gesamtzusammensetzung, liegen.

Als Härtungsmittel auf Peroxidbasis kommen insbesondere Peroxide, Hydroperoxide, Perester, Persalze, Persäuren und/oder Mischungen davon in Frage. Besonders bevorzugt sind die Hydroperoxide, wie z.B. Cumol- oder Diisopropylbenzolhydroperoxid. Am meisten bevorzugt ist Cumolhydroperoxid. Geeignet sind z.B. auch tert.-Butylhydroperoxid (TBH), tert.-Butylperbenzoat (TBPB) und Benzoylperoxid (BPO). Geeignete Einsatzmengen können typischerweise im Bereich einer Gesamtmenge von 0,5 Gew.-% bis 3 Gew.-% der gesamten Zusammensetzung liegen.

Der Zusatz von Stabilisatoren, wie z.B. von Produkten auf Basis sterisch gehinderter Phenole, Hydrochinone oder Chinone, verhindert ein vorzeitiges unerwünschtes Starten der radikalischen Kettenreaktion und erhöht die Lagerstabilität der Zusammensetzung.

Bevorzugte Stabilisatoren, welche in beiden Komponenten enthalten sein können, sind, unabhängig voneinander, ausgewählt aus Thiazinen, Hydrochinonen, Chinonen, sterisch gehinderten Phenolen (z.B. 2,6-Di-tert-butyl-4-methylphenol), organischen Säuren und Verbindungen, die eine Oxazol-Funktionalität aufweisen. Besonders bevorzugt ist jedoch der Einsatz von Hydrochinonen und sterisch gehinderten Phenolen. Die Gesamtmenge der Stabilisatoren kann z.B. im Bereich von bei 0,1 bis 10 Gew.-% liegen, bezogen auf die Gesamtzusammensetzung.

Als katalytische Komponenten zur Katalysierung der Härtungsreaktion können jene Stoffe eingesetzt werden, welche den Zerfall der Härtungsmittel, insbesondere der Peroxide, zu Radikalen katalysieren können. Geeignet sind z.B. tertiäre Amine, wie z.B. N,N-Dimethyl-p-toluidin, N,N-Dihydroxyethyl-p-toluidin, Dimethylanilin, Diethylanilin, N,N-Diethyl-p-toluidin und Kombinationen davon.

Geeignet sind auch Imine, wie z.B. das Imin aus Butanal und Anilin. Ebenfalls geeignet sind Dihydropyridinderivate, wie z.B. 3,5-Diethyl-1,2-dihydro-1-phenyl-2-propylpyridin. Ebenso können Übergangsmetallsalze, beispielsweise Kupfer- und/oder Cobaltsalze, wie z.B. Kupferoctanoat, die vorzugsweise in organischen Medien löslich sind, eingesetzt werden. Es ist besonders bevorzugt, ein Übergangsmetallsalz in Kombination mit einem tertiären Amin, einem Imin oder Dihydropyridinderivat als katalytische Komponenten zur Katalysierung der Härtungsreaktion einzusetzen. Die geeignete Gesamtmenge der katalytische(n) Komponente(n) zur Katalysierung der Härtungsreaktion liegt vorzugsweise im Bereich von 0,01 bis 5 Gew.-%, bezogen auf die gesamte Zusammensetzung.

Komponenten zur Verbesserung der Schlagzähigkeit (sogenannte "toughener") sind insbesondere Elastomere, vorzugsweise chlorsulfoniertes Polyethylen (sogenannte "Hypalone", ex DuPont). Chlorsulfoniertes Polyethylen kann z.B. in Mengen von vorzugsweise 5-50 Gew.-%, insbesondere 10-30 Gew.-% in der gesamten Zusammensetzung enthalten sein. Chlorsulfoniertes Polyethylen kann z.B. durch gleichzeitige Umsetzung von Polyethylen mit Chlor und Schwefeldioxid hergestellt werden. Chlorsulfonierte Polyethylen-Typen des Handels enthalten typischerweise ca. 25-45 % Chlor und 0,8-1,5 % Schwefel.

Bevorzugt einsetzbare Komponenten zur Verbesserung der Schlagzähigkeit (sogenannte "toughener") sind insbesondere auch Styrol-Acrylnitril-Butadien-Copolymere (wie z.B. Blendex 338 ex Chemtura), kurz ABS-Copolymere genannt. ABS-Copolymere gehören zur Gruppe der elastomermodifizierten Thermoplaste. Bei den erfindungsgemäß einsetzbaren ABS-Copolymeren handelt sich vorzugsweis um thermoplastische und elastische Polymer-Blends, deren diskontinuierliche, elastische Phase aus Homo- oder Copolymeren des Buta-1,3-diens in einer kontinuierlichen Phase aus steifen, thermo-plastischen Styrol-Acrylnitril-Copolymeren dispergiert ist. Styrol-Acrylnitril-Butadien-Copolymere können z.B. in Mengen von vorzugsweise 5-50 Gew.-%, insbesondere 10-30 Gew.-% in der gesamten Zusammensetzung enthalten sein.

An sich kann jede geeignete Komponente zur Verbesserung der Schlagzähigkeit in der vorliegenden Erfindung verwendet werden. Insbesondere kann die Komponente zur Verbesserung der Schlagzähigkeit der vorliegenden Erfindung aus einer Vielzahl von elastomeren Materialien gewählt werden. Zum Beispiel, können Polyacrylat, Styrol/Butadien /Styrol (SBS)- Copolymer, Styrol/Isopren/Styrol (SIS)-Copolymer oder Styrol/Butadien-Copolymer eingesetzt werden. Geeignet sind ferner Elastomere ausgewählt aus der Gruppe bestehend aus Acrylat-Butadien-Copolymer, Butadien, Chloropren, Ethylen-Propylen, Ethylen-Propylen-Dien, Isopren, Isobutylen, Isobutylen-Isopren (Butylkautschuk), Styrol-Butadien, Styrol-Isopren, Acrylnitril-Butadien, Acrylnitril-Chloropren, Vinylpyridin-Butadien, Vinylpyridin-Styrol-Butadien, Chloroisobutylen-Isopren (Chlorobutyl-Gummi), Bromoisobutylen-Isopren (Brombutylgummi), Dialkysiloxan, Polypropylenoxid, Polyesteruethan Polyetherurethan sowie deren Mischungen. Darüber hinaus können reaktive flüssige Polymere eingesetzt werden. Reaktive flüssige Polymere enthalten funktionelle Gruppen, in der Regel an ihren terminalen Enden, und reagieren mit dem Harz in situ, um elastomere Domänen zu bilden. Beispiele für reaktive flüssige Polymere sind Carboxy-terminiertes Butadien Nitril (CTBN), Amin-terminiertes Butadien Nitril (ATBN), Hydroxy-terminiertes Butadien Nitril (HTBN), Epoxy-terminiertes Butadien Nitril (ETBN), Mercapto-terminiertes Butadien Nitril (MTPN) und Phenoxy-terminiertes Butadien Nitril (PTBN).

Besonders nützliche Komponenten zur Verbesserung der Schlagzähigkeit sind jedenfalls chlorsulfoniertes Polyethylen, Styrol-Acrylnitril-Butadien-Copolymere (wie z.B. Blendex 338 ex Chemtura) und/oder Nitrilkautschuk.

Am meisten bevorzugt sind chlorsulfonierte Polyethylene, wie zum Beispiel Hypalon 20 oder Hypalon 30 ex DuPont, sowie Styrol-Acrylnitril-Butadien-Copolymere (wie z.B. Blendex 338 ex Chemtura), wobei es bevorzugt ist, chlorsulfonierte Polyethylene und Styrol-Acrylnitril-Butadien-Copolymere in Kombination einzusetzen. Hierdurch konnten besonders gute Festigkeitswerte bei der Rohrverbindung erzielt werden.

Die einsetzbare Gesamtmenge der Komponente(n) zur Verbesserung der Schlagzähigkeit kann vorzugsweise im Bereich von 5-70 Gew.-%, insbesondere 10-60 Gew.-% liegen, bezogen auf die gesamte Zusammensetzung.

Ein nicht erfindungsgemäßer härtbarer (Meth)acrylat-Klebstoff, umfasst:
eine erste Komponente, umfassend:
   (i) wenigstens eine polymerisierbare Monomerkomponente auf (Meth)acrylatbasis, vorzugsweise umfassend Methylmethacrylat,
   (ii) Härtungsmittel, vorzugsweise auf Peroxidbasis,
   (iii) Stabilisator und
eine zweite Komponente, umfassend:
   (i) wenigstens eine polymerisierbare Monomerkomponente auf (Meth)acrylatbasis, vorzugsweise umfassend Methylmethacrylat,
   (ii) katalytische Komponente zur Katalysierung der Härtungsreaktion,
   (iii) Stabilisator.

Die polymerisierbaren Monomere der ersten Komponente sind vorzugsweise in Mengen von 20 bis 60 Gew.-%, insbesondere 30 bis 50 Gew.-% des Gesamtgewichts der ersten Komponente vorhanden.

Das Härtungsmittel, insbesondere auf Peroxidbasis, der ersten Komponente ist vorzugsweise in Mengen von 0,1 bis 5 Gew.-%, insbesondere 0,2 bis 4 Gew.-% des Gesamtgewichts der ersten Komponente vorhanden.

Der Stabilisator der ersten Komponente ist vorzugsweise in Mengen von 0,1 bis 5 Gew.-%, insbesondere 0,2 bis 4 Gew.-% des Gesamtgewichts der ersten Komponente vorhanden.

Die polymerisierbaren Monomere der zweiten Komponente sind vorzugsweise in Mengen von 10 bis 90 Gew.-%, insbesondere 30 bis 80 Gew.-% des Gesamtgewichts der zweiten Komponente vorhanden.

Die katalytische Komponente der zweiten Komponente ist vorzugsweise in Mengen von 0,01 bis 5 Gew.-%, insbesondere 0,02 bis 4 Gew.-% des Gesamtgewichts der zweiten Komponente vorhanden.

Der Stabilisator der zweiten Komponente ist vorzugsweise in Mengen von 0,1 bis 5 Gew.-%, insbesondere 0,2 bis 4 Gew.-% des Gesamtgewichts der zweiten Komponente vorhanden.

Ein nicht erfindungsgemäßer härtbarer (Meth)acrylat-Klebstoff umfasst: eine erste Komponente, umfassend:
(i) wenigstens eine polymerisierbare Monomerkomponente auf (Meth)acrylatbasis, vorzugsweise umfassend Methylmethacrylat, in einer Gesamtmenge von 20 bis 60 Gew.-%, bezogen auf die erste Komponente,
(ii) Härtungsmittel auf Peroxidbasis in einer Gesamtmenge von 0,1 bis 5 Gew.-%, bezogen auf die erste Komponente,
(iii) Stabilisator in einer Gesamtmenge von 0,1 bis 5 Gew.-%, bezogen auf die erste Komponente,
und
eine zweite Komponente, umfassend:
(i) wenigstens eine polymerisierbare Monomerkomponente auf (Meth)acrylatbasis, vorzugsweise umfassend Methylmethacrylat, in einer Gesamtmenge von 10 bis 90 Gew.-%, bezogen auf die zweite Komponente,
(ii) katalytische Komponente zur Katalysierung der Härtungsreaktion in einer Gesamtmenge von 0,01 bis 5 Gew.-%, bezogen auf die zweite Komponente,
(iii) Stabilisator einer Gesamtmenge von 0,1 bis 5 Gew.-%, bezogen auf die zweite Komponente. Ein weiterer im Sinne der Erfindung bevorzugt einsetzbarer härtbarer (Meth)acrylat-Klebstoff umfasst:
   eine erste Komponente, umfassend:
   (i) Methylmethacrylat in Mengen von 20 bis 60 Gew.-%, bezogen auf die erste Komponente,
   (ii) Härterkomponente auf Peroxidbasis in einer Gesamtmenge von 0,1 bis 5 Gew.-%, bezogen auf die erste Komponente,
   (iii) Stabilisator in einer Gesamtmenge von 0,1 bis 5 Gew.-%, bezogen auf die erste Komponente,
   (iv) Komponente zur Verbesserung der Schlagzähigkeit (sogenannter "toughener") in einer Gesamtmenge von 5 bis 50 Gew.-%, bezogen auf die erste Komponente,
   (v) vorzugsweise Verdickungsmittel in einer Gesamtmenge von 0,5-20 Gew.-%, bezogen auf die erste Komponente,
   (vi) Methacrylsäure in Mengen von 0,5 bis 10 Gew.-%, vorzugsweise 1-5 Gew.-%, bezogen auf die erste Komponente,
   und
   eine zweite Komponente, umfassend:
   (i) Methylmethacrylat in Mengen von 10 bis 90 Gew.-%, bezogen auf die zweite Komponente,
   (ii) katalytische Komponente zur Katalysierung der Härtungsreaktion in einer Gesamtmenge von 0,01 bis 5 Gew.-%, bezogen auf die zweite Komponente,
   (iii) Stabilisator in einer Gesamtmenge von 0,1 bis 5 Gew.-%, bezogen auf die zweite Komponente,
   (iv) Komponente zur Verbesserung der Schlagzähigkeit (sogenannter "toughener") in einer Gesamtmenge von 5 bis 50 Gew.-%, bezogen auf die zweite Komponente,
   (v) vorzugsweise Verdickungsmittel in einer Gesamtmenge von 0,5-20 Gew.-%, bezogen auf die zweite Komponente. Dabei ist in zumindest einer der beiden Komponenten, insbesondere in der ersten Komponente ein Methacrylat mit polarer Gruppe, insbesondere Hydroxyethylmethacrylat und/oder Hydroxypropylmethacrylat, enthalten, insbesondere in einer Gesamtmenge von 5-15 Gew.-%, bezogen auf die betreffende Komponente.

Als Verdickungsmittel ist insbesondere pyrogenes Siliziumdioxid geeignet.

Die erfindungsgemäß einsetzbaren (Meth)acrylat-Klebstoffe können je nach Bedarf weitere optionale Komponenten enthalten, beispielsweise eine optionale Farbstoffkomponente. Chelatbildner können ebenfalls in den (Meth)acrylat-Klebstoffen eingesetzt werden, insbesondere zur Kontrolle und Verhinderung vorzeitiger Peroxidzersetzung und Polymerisation, sowie um Spuren von metallischen Verunreinigungen zu entfernen. Ein besonders bevorzugter Chelatbildner ist das Tetranatriumsalz der Ethylendiamintetraessigsäure (EDTA). Nützliche Gesamtmengen an Chelatbildner, insbesondere EDTA, liegen typischerweise im Bereich von 0,01 Gew.-% bis 5 Gew.-% der gesamten Zusammensetzung. Insbesondere kann der Chelatbildner, insbesondere EDTA, in einer Gesamtmenge von 0,02 Gew.-% bis 3 Gew.-% der gesamten Zusammensetzung enthalten sein.

Organische Säuren können in der vorliegenden Erfindung verwendet werden. Geeignete organische Säuren sind zum Beispiel Carbonsäuren. Geeignete Carbonsäuren sind beispielsweise Maleinsäure sowie Fumarsäure.

Die nützliche Gesamtmenge optionaler organischer Säure liegt in der Regel im Bereich von vorzugsweise 0 Gew.% bis 9 Gew.%, bezogen auf die gesamte Zusammensetzung. Z.B. kann die organische Säure in einer Gesamtmenge von 0,1 Gew.-% bis 5 Gew.-%, bezogen auf die gesamte Zusammensetzung, enthalten sein.

Eine im Sinne der Erfindung vorzugsweise einsetzbarer härtbarer Zweikomponenten-(Meth)acrylatklebstoff umfasst in der Gesamtzusammensetzung
a) Methylmethacrylat in Mengen von 30-60 Gew-%,
b) Hydroxyethylmethacrylat und/oder Hydroxypropylmethacrylat in einer Gesamtmenge von 5-15 Gew.-%,
c) Methacrylsäure in Mengen von 0,5 bis 10 Gew.-%, vorzugsweise 1-5 Gew.-%,
d) eine oder mehrere Komponenten zur Verbesserung der Schlagzähigkeit, insbesondere umfassend chlorsulfoniertes Polyethylen und/oder Styrol-Acrylnitril-Butadien-Copolymer, in einer Gesamtmenge von 5 bis 70 Gew.-%, vorzugsweise 10-60 Gew.-%,
e) Härtungsmittel auf Peroxidbasis in einer Gesamtmenge von 0,1 bis 5 Gew.-%,
f) katalytische Komponente(n) zur Katalysierung der Härtungsreaktion, vorzugsweise in einer Gesamtmenge von 0,01 bis 5 Gew.-%,
g) Stabilisator in einer Gesamtmenge von 0,1 bis 15 Gew.-%,
h) optional Verdickungsmittel, vorzugsweise pyrogene Kieselsäuren, vorzugsweise in einer Gesamtmenge von 0,1 bis 30 Gew.-%,
wobei die Gew.-%-Angabe jeweils auf die Gesamtzusammensetzung bezogen ist,
wobei die Gesamtzusammensetzung aufgeteilt ist auf zwei Komponenten (a) und (b), eine erste Komponente (a), umfassend:
(i) Methylmethacrylat in Mengen von 20 bis 60 Gew.-%, bezogen auf die Komponente (a),
(ii) Härterkomponente auf Peroxidbasis in einer Gesamtmenge von 0,1 bis 5 Gew.-%, bezogen auf die Komponente (a),
(iii) Stabilisator in einer Gesamtmenge von 0,1 bis 5 Gew.-%, bezogen auf die Komponente (a),
(iv) Komponente zur Verbesserung der Schlagzähigkeit (sogenannter "toughener") in einer Gesamtmenge von 5 bis 50 Gew.-%, bezogen auf die Komponente (a),
(v) vorzugsweise Verdickungsmittel in einer Gesamtmenge von 0,5-20 Gew.-%, bezogen auf die Komponente (a),
(vi) Methacrylsäure in Mengen von 1-5 Gew.-%,
sowie eine zweite Komponente (b), umfassend:
(i) Methylmethacrylat in Mengen von 10 bis 90 Gew.-%, bezogen auf die Komponente (b),
(ii) katalytische Komponente zur Katalysierung der Härtungsreaktion in einer Gesamtmenge von 0,01 bis 5 Gew.-%, bezogen auf die Komponente (b),
(iii) Stabilisator in einer Gesamtmenge von 0,1 bis 5 Gew.-%, bezogen auf die Komponente (b),
(iv) Komponente zur Verbesserung der Schlagzähigkeit (sogenannter "toughener") in einer Gesamtmenge von 5 bis 50 Gew.-%, bezogen auf die Komponente (b),
(v) vorzugsweise Verdickungsmittel in einer Gesamtmenge von 0,5-20 Gew.-%, bezogen auf die Komponente (b). Dabei ist das Hydroxyethylmethacrylat und/oder Hydroxypropylmethacrylat vorzugsweise in der Komponente (a) enthalten und zwar in einer Gesamtmenge von 5-15 Gew.-%, bezogen auf die betreffende Komponente.

Weiterhin ist es möglich, dass die erfindungsgemäße Zusammensetzung optional einen sogeannnten Offenzeitverlängerer, insbesondere auf Wachsbasis, enthält, vorzugsweise in beiden Komponenten der Gesamtzusammensetzung. Offenzeitverlängerer dienen zur Verlängerung der Offenzeit und sind dem Fachmann an sich bekannt. Jeder geeignete Offenzeitverlängerer kann in den erfindungsgemäßen Zusammensetzungen optional enthalten sein. Geeignete Offenzeitverlängerer umfassen eine Reihe verschiedener Wachse, wobei Paraffinwachs wie beispielsweise "IGI 1977" von International Group bevorzugt wird. Nützliche Mengen des optionalen Offenzeitverlängerers liegen typischerweise im Bereich von 0,1 Gew.-% bis 3 Gew.%, vorzugsweise von 0,2 Gew.% bis 1,5 Gew.%, bezogen auf die gesamte Zusammensetzung.

Gemäß einer weiteren bevorzugten Ausführungsform handelt es sich bei den erfindungsgemäß zu verwendenden Kunststoff-Rohren um Druckrohre. Druckrohre sind dem Fachmann an sich bekannt, sie werden für Druckrohrleitungen eingesetzt. Als Druckrohrleitung bezeichnet man eine Rohrleitung, in der im Gegensatz zu einer Freispiegelleitung ein größerer Druck herrscht als der atmosphärische Druck. Drucklose Anwendungen, also Gravitationsleitungen oder Freispiegelleitungen, können erfindungsgemäß selbstverständlich ebenfalls verwirklicht werden.

Die erfindungsgemäß bereitstellbaren Rohrverbindungen sind insbesondere für den Transport von Wasser einsetzbar, andere Medien sind jedoch ebenfalls ohne Weiteres transportierbar, wie z.B. Glykolmischungen, welche z.B. als Kühlmittel Anwendung finden. Besonders bevorzugt ist jedoch der Wassertransport.

Gemäß einer bevorzugten Ausführungsform werden demnach die erfindungsgemäßen Rohrverbindungen insbesondere für Trinkwasserleitungen, Brauchwasserleitungen und/oder zur Druckentwässerung eingesetzt.

Die erfindungsgemäßen Verfahren zum stoffschlüssigen Verbinden von Kunststoff-Rohren führen zu Rohrverbunden aus mindestens zwei Kunststoff-Rohren.

Ein weiterer Gegenstand der vorliegenden Erfindung ist demnach ein Rohrverbund gemäß Anspruch 11.

### Beispiel:

Die Scherfestigkeit geklebter PVC-U-Rohrverbindungen wurde nach DIN EN ISO 9311-2 getestet. Die Mindestanforderung an die Scherfestigkeit der Rohrverbindung beträgt nach DIN EN 14814 bei einer Prüftemperatur von 23°C 1h nach Verklebung 0,4 MPa, 24h nach Verklebung 1,5 MPa und 480h nach Verklebung 7,0 MPa.

Mit einem erfindungsgemäßen 2K-(Meth)acrylat-Klebstoff wurde zunächst ein 75 mm langer Rohrabschnitt (Material: PVC-U; 40 mm Außendurchmesser) mit einem Fitting aus gleichem Material über eine Länge von 20 mm verklebt und danach bezüglich der Scherfestigkeit der Verbindung gemäß DIN EN ISO 9311-2 untersucht. Der erfindungsgemäß eingesetzte 2K-(Meth)acrylat-Klebstoff unterlag dabei folgender Rahmenrezeptur:
a) Methylmethacrylat in einer Menge von 30-60 Gew-%,
b) Hydroxyethylmethacrylat in einer Menge von 5-15 Gew.-%,
c) Methacrylsäure in einer Menge von 1-5 Gew.-%,
d) Komponenten zur Verbesserung der Schlagzähigkeit in einer Gesamtmenge von 10 bis 60 Gew.-%,
e) Härtungsmittel auf Peroxidbasis in einer Menge von 0,1 bis 5 Gew.-%,
f) katalytische Komponente zur Katalysierung der Härtungsreaktion in einer Menge von 0,01 bis 5 Gew.-%,
g) Stabilisator in einer Gesamtmenge von 0,1 bis 15 Gew.-%,
h) Verdickungsmittel in einer Menge von 0,5-20 Gew.-%,
wobei die Gew.-%-Angabe jeweils auf die Gesamtzusammensetzung bezogen ist.

Die daraufhin nach DIN EN ISO 9311-2 bei einer Prüftemperatur von 23°C bestimmte Scherfestigkeit der Verbindung betrug 1h nach Verklebung 5,0 MPa, 24h nach Verklebung 16 MPa und 480h nach Verklebung 20 MPa. Der Wert der Endfestigkeit kann dem 480h-Wert gleichgesetzt werden. Die Erfindung ermöglicht demnach bereits nach 24h eine Festigkeit, welche mehr als doppelt so groß ist wie diejenige, welche nach DIN EN 14814 erforderlich ist. Bereits nach 1h weist die Verbindung eine sehr hohe Festigkeit auf, welche ein Mehrfaches der 24h-Anforderung gemäß DIN EN 14814 beträgt.

Zum Vergleich wurde die gleiche Untersuchung wiederholt, wobei an Stelle des erfindungsgemäßen 2K-(Meth)acrylat-Klebstoffs dieses Mal ein handelsüblicher lösemittelbasierter Klebstoff für PVC-U-Rohre eingesetzt wurde. Die diesbezüglich nach DIN EN ISO 9311-2 bestimmte Scherfestigkeit der Klebeverbindung betrug 1h nach Verklebung 0,8 MPa, 24h nach Verklebung 2,5 MPa und 480h nach Verklebung 13 MPa. Die erfindungsgemäße Klebetechnik ist demnach derjenigen auf Basis handelsüblicher lösemittelbasierter Klebstoffe sowohl was die erzielte Festigkeit der Verbindung als auch was die Schnelligkeit der Klebewirkung betrifft überaus deutlich überlegen.

## Patentansprüche

1. Verfahren zum stoffschlüssigen Verbinden von Kunststoff-Rohren mittels Fitting, wobei
(a) auf die Fügeoberfläche des Fittings und/oder auf die Fügeoberflächen der damit zu verbindenden Rohrenden ein Klebstoff aufgebracht wird, und danach
(b) Rohre und Fitting zusammengeschoben werden, und danach
(c) Aushärtenlassen des Klebstoffes erfolgt,
**dadurch gekennzeichnet, dass** als Klebstoff ein (Meth)acrylat-Zweikomponentenklebstoff eingesetzt wird,
wobei in dem gesamten (Meth)acrylat-Zweikomponentenklebstoff
(i) zumindest drei unterschiedliche polymerisierbare Monomerkomponenten auf (Meth)acrylatbasis eingesetzt werden, umfassend
a) Methylmethacrylat, in Mengen von 20-70 Gew.-%, bezogen auf die Gesamtzusammensetzung,
b) Methacrylat mit polarer Gruppe, ausgewählt aus Cyclohexylmethacrylat, Tetrahydrofurfurylmethacrylat, Hydroxyethylmethacrylat, Hydroxypropylmethacrylat, t-Butylaminoethylmethacrylat, Cyanoethylmethacrylat, und Chloroethylmethacrylat, insbesondere aber Hydroxyethylmethacrylat und/oder Hydroxypropylmethacrylat, in Mengen von 5-30 Gew.-%, bezogen auf die Gesamtzusammensetzung,
und
(c) eine saure Monomerkomponente, insbesondere Methacrylsäure, in Mengen von 0,5 bis 10 Gew.-%, bezogen auf die Gesamtzusammensetzung.

2. Verfahren zum stoffschlüssigen Verbinden von Kunststoff-Rohren,
wobei die Rohrverbindung durch Zusammenschieben eines ersten Rohrendes mit einem zweiten Rohrende erzielt wird, wobei das eine Rohrende einen Aufnahmerohrteil und das andere Rohrende einen Einsteckrohrteil darstellt,
wobei vor dem Zusammenschieben der Rohrenden auf zumindest eine der miteinander zu verbindenden Fügeteiloberflächen ein Klebstoff aufgebracht wird und nach dem Zusammenschieben ein Aushärtenlassen des Klebstoffes erfolgt,
**dadurch gekennzeichnet, dass** als Klebstoff ein (Meth)acrylat- Zweikomponentenklebstoff eingesetzt wird,
wobei in dem gesamten (Meth)acrylat-Zweikomponentenklebstoff
(i) zumindest drei unterschiedliche polymerisierbare Monomerkomponenten auf (Meth)acrylatbasis eingesetzt werden, umfassend
a) Methylmethacrylat, in Mengen von 20-70 Gew.-%, bezogen auf die Gesamtzusammensetzung,
b) Methacrylat mit polarer Gruppe, ausgewählt aus Cyclohexylmethacrylat, Tetrahydrofurfurylmethacrylat, Hydroxyethylmethacrylat, Hydroxypropylmethacrylat, t-Butylaminoethylmethacrylat, Cyanoethylmethacrylat, und Chloroethylmethacrylat, insbesondere aber Hydroxyethylmethacrylat und/oder Hydroxypropylmethacrylat, in Mengen von 5-30 Gew.-%, bezogen auf die Gesamtzusammensetzung,
und
(c) eine saure Monomerkomponente, insbesondere Methacrylsäure, in Mengen von 0,5 bis 10 Gew.-%, bezogen auf die Gesamtzusammensetzung.

3. Verfahren nach einem der Ansprüche 1 oder 2, **dadurch gekennzeichnet, dass** das Aufbringen des Klebstoffs durch ein Auftragswerkzeug, insbesondere durch Pinselauftrag erfolgt.

4. Verfahren nach einem der Ansprüche 1 bis 3, **dadurch gekennzeichnet, dass** die Klebstoff-Filmstärke auf der Fügeteiloberfläche vor dem Zusammenfügen im Bereich 0,1 mm bis 3 mm, vorzugsweise 0,3 mm bis 1,5 mm, insbesondere 0,2 mm bis 0,6 mm liegt.

5. Verfahren nach einem der Ansprüche 1 bis 4, **dadurch gekennzeichnet, dass** das Zusammenschieben von Rohr und Fitting oder Rohr und Rohr ohne Verdrehen erfolgt.

6. Verfahren nach einem der Ansprüche 1 bis 5, **dadurch gekennzeichnet, dass** es sich um Kunststoff-Rohre auf Basis thermoplastischer Kunststoffe handelt, insbesondere auf Basis PVC, ABS, ASA, ABS/ASA oder PET.

7. Verfahren nach einem der Ansprüche 1 bis 6, **dadurch gekennzeichnet, dass** die Fügeteile aus unterschiedlichen Kunststoff-Materialien bestehen.

8. Verfahren nach einem der Ansprüche 1 bis 7, **dadurch gekennzeichnet, dass** der Klebstoff weniger als 10 Gew.-%, vorzugsweise weniger als 5 Gew.-%, insbesondere weniger als 2 Gew.-% Lösungsmittel enthält.

9. Verfahren nach einem der Ansprüche 1 bis 8, **dadurch gekennzeichnet, dass** es sich bei den Kunststoff-Rohren um Druckrohre handelt.

10. Verfahren nach einem der Ansprüche 1 bis 9, **dadurch gekennzeichnet, dass** die Rohrverbindung für Trinkwasserleitungen, Brauchwasserleitungen und/oder zur Druckentwässerung eingesetzt wird.

11. Rohrverbund aus mindestens zwei Kunststoff-Rohren mit oder ohne Fitting-Einsatz zwischen den Rohrenden, geeignet für Trinkwasserleitungen, Brauchwasserleitungen und/oder zur Druckentwässerung, **dadurch gekennzeichnet, dass** die Fügeteiloberflächen der miteinander verbundenen Fügeteile mit einem (Meth)acrylat-Zweikomponentenklebstoff befestigt sind, und
wobei in dem gesamten (Meth)acrylat-Zweikomponentenklebstoff
(i) zumindest drei unterschiedliche polymerisierbare Monomerkomponenten auf (Meth)acrylatbasis eingesetzt werden, umfassend
a) Methylmethacrylat, in Mengen von 20-70 Gew.-%, bezogen auf die Gesamtzusammensetzung,
b) Methacrylat mit polarer Gruppe, ausgewählt aus Cyclohexylmethacrylat, Tetrahydrofurfurylmethacrylat, Hydroxyethylmethacrylat, Hydroxypropylmethacrylat, t-Butylaminoethylmethacrylat, Cyanoethylmethacrylat, und Chloroethylmethacrylat, insbesondere aber Hydroxyethylmethacrylat und/oder Hydroxypropylmethacrylat, in Mengen von 5-30 Gew.-%, bezogen auf die Gesamtzusammensetzung,
und
(c) eine saure Monomerkomponente, insbesondere Methacrylsäure, in Mengen von 0,5 bis 10 Gew.-%, bezogen auf die Gesamtzusammensetzung.

12. Verfahren nach einem der Ansprüche 1-10 oder Rohrverbindung nach Anspruch 11, **dadurch gekennzeichnet, dass** der (Meth)acrylat-Klebstoff in der
Gesamtzusammensetzung
a) Methylmethacrylat in Mengen von 30-60 Gew-%,
b) Hydroxyethylmethacrylat und/oder Hydroxypropylmethacrylat in einer Gesamtmenge von 5-15 Gew.-%,
c) Methacrylsäure in Mengen von 0,5 bis 10 Gew.-%, vorzugsweise 1-5 Gew.-%,
d) eine oder mehrere Komponenten zur Verbesserung der Schlagzähigkeit, insbesondere umfassend chlorsulfoniertes Polyethylen und/oder Styrol-Acrylnitril-Butadien-Copolymer, in einer Gesamtmenge von 5 bis 70 Gew.-%
e) Härtungsmittel auf Peroxidbasis in einer Gesamtmenge von 0,1 bis 5 Gew.-%,
f) katalytische Komponente(n) zur Katalysierung der Härtungsreaktion,
g) Stabilisator in einer Gesamtmenge von 0,1 bis 15 Gew.-%,
h) optional Verdickungsmittel, vorzugsweise pyrogene Kieselsäuren, enthält,
wobei die Gew-%-Angabe jeweils auf die Gesamtzusammensetzung bezogen ist.

13. Verfahren oder Rohrverbindung nach Anspruch 12,
**dadurch gekennzeichnet, dass** die Gesamtzusammensetzung des (Meth)acrylat-Klebstoffs aufgeteilt ist auf zwei Komponenten (a) und (b),
eine erste Komponente (a), umfassend:
(i) Methylmethacrylat in Mengen von 20 bis 60 Gew.-%, bezogen auf die Komponente (a),
(ii) Härterkomponente auf Peroxidbasis in einer Gesamtmenge von 0,1 bis 5 Gew.-%, bezogen auf die Komponente (a),
(iii) Stabilisator in einer Gesamtmenge von 0,1 bis 5 Gew.-%, bezogen auf die Komponente (a),
(iv) Komponente zur Verbesserung der Schlagzähigkeit (sogenannter "toughener") in einer Gesamtmenge von 5 bis 50 Gew.-%, bezogen auf die Komponente (a),
(v) vorzugsweise Verdickungsmittel in einer Gesamtmenge von 0,5-20 Gew.-%, bezogen auf die Komponente (a),
(vi) Methacrylsäure in Mengen von 1-5 Gew.-%, bezogen auf die Komponente (a), sowie eine zweite Komponente (b), umfassend:
(i) Methylmethacrylat in Mengen von 10 bis 90 Gew.-%, bezogen auf die Komponente (b),
(ii) katalytische Komponente zur Katalysierung der Härtungsreaktion in einer Gesamtmenge von 0,01 bis 5 Gew.-%, bezogen auf die Komponente (b),
(iii) Stabilisator in einer Gesamtmenge von 0,1 bis 5 Gew.-%, bezogen auf die Komponente (b),
(iv) Komponente zur Verbesserung der Schlagzähigkeit (sogenannter "toughener") in einer Gesamtmenge von 5 bis 50 Gew.-%, bezogen auf die Komponente (b),
(v) vorzugsweise Verdickungsmittel in einer Gesamtmenge von 0,5-20 Gew.-% bezogen auf die Komponente (b).

## Claims

1. A method for integrally bonding plastics pipes by means of a fitting,
(a) an adhesive being applied to the joining surface of the fitting and/or to the joining surfaces of the pipe ends to be connected thereby, and then
(b) the pipes and the fitting being pushed together, and then
(c) the adhesive being left to cure,
**characterized in that** a two-component (meth)acrylate adhesive is used as the adhesive,
and, in the entire two-component (meth)acrylate adhesive,
(i) at least three different polymerizable (meth)acrylate-based monomer components being used, comprising
a) methyl methacrylate in amounts of from 20-70 wt.% based on the total composition,
b) methacrylate having polar groups, selected from cyclohexyl methacrylate, tetrahydrofurfuryl methacrylate, hydroxyethyl methacrylate, hydroxypropyl methacrylate, t-butylaminoethyl methacrylate, cyanoethyl methacrylate and chloroethyl methacrylate, in particular hydroxyethyl methacrylate and/or hydroxypropyl methacrylate, in amounts of from 5-30 wt.% based on the total composition,
and
(c) an acidic monomer component, in particular methacrylic acid, in amounts of from 0.5 to 10 wt.% based on the total composition.

2. A method for integrally bonding plastics pipes,
the pipe connection being achieved by pushing together a first pipe end and a second pipe end, one pipe end being a receiving pipe part and the other pipe end being an insertion pipe part,
an adhesive being applied to at least one of the joining-part surfaces to be interconnected before the pipe ends are pushed together, and the adhesive being left to cure after said ends are pushed together,
**characterized in that** a two-component (meth)acrylate adhesive is used as the adhesive, and, in the entire two-component (meth)acrylate adhesive,
(i) at least three different polymerizable (meth)acrylate-based monomer components being used, comprising
a) methyl methacrylate in amounts of from 20-70 wt.% based on the total composition,
b) methacrylate having polar groups, selected from cyclohexyl methacrylate, tetrahydrofurfuryl methacrylate, hydroxyethyl methacrylate, hydroxypropyl methacrylate, t-butylaminoethyl methacrylate, cyanoethyl methacrylate and chloroethyl methacrylate, in particular hydroxyethyl methacrylate and/or hydroxypropyl methacrylate, in amounts of from 5-30 wt.% based on the total composition,
and
(c) an acidic monomer component, in particular methacrylic acid, in amounts of from 0.5 to 10 wt.% based on the total composition.

3. The method according to one of claims 1 or 2, **characterized in that** the adhesive is applied by an application tool, in particular by a brush.

4. The method according to one of claims 1 to 3, **characterized in that** the adhesive film thickness on the joining-part surface is in the range of from 0.1 mm to 3 mm, preferably 0.3 mm to 1.5 mm, in particular 0.2 mm to 0.6 mm before joining.

5. The method according to one of claims 1 to 4, **characterized in that** the pipe and fitting or the pipe and pipe are pushed together without rotation.

6. The method according to one of claims 1 to 5, **characterized in that** the plastics pipes are based on thermoplastic materials, in particular based on PVC, ABS, ASA, ABS/ASA or PET.

7. The method according to one of claims 1 to 6, **characterized in that** the joining parts consist of different plastics materials.

8. The method according to one of claims 1 to 7, **characterized in that** the adhesive contains less than 10 wt.%, preferably less than 5 wt.%, in particular less than 2 wt.% solvent.

9. The method according to one of claims 1 to 8, **characterized in that** the plastics pipes are pressure pipes.

10. The method according to one of claims 1 to 9, **characterized in that** the pipe connection is used for drinking water lines, raw water lines and/or for pressure dewatering.

11. A composite pipe consisting of at least two plastics pipes with or without a fitting being used between the pipe ends, suitable for drinking water lines, raw water lines and/or for pressure dewatering, **characterized in that** the joining-part surfaces of the interconnected joining parts are attached using a two-component (meth)acrylate adhesive,
and, in the entire two-component (meth)acrylate adhesive,
(i) at least three different polymerizable (meth)acrylate-based monomer components being used, comprising
a) methyl methacrylate in amounts of from 20-70 wt.% based on the total composition,
b) methacrylate having polar groups, selected from cyclohexyl methacrylate, tetrahydrofurfuryl methacrylate, hydroxyethyl methacrylate, hydroxypropyl methacrylate, t-butylaminoethyl methacrylate, cyanoethyl methacrylate and chloroethyl methacrylate, in particular hydroxyethyl methacrylate and/or hydroxypropyl methacrylate, in amounts of from 5-30 wt.% based on the total composition,
and
(c) an acidic monomer component, in particular methacrylic acid, in amounts of from 0.5 to 10 wt.% based on the total composition.

12. The method according to one of claims 1-10 or the pipe connection according to claim 11, **characterized in that** the (meth)acrylate adhesive contains, in the total composition,
a) methyl methacrylate in amounts of from 30-60 wt.%,
b) hydroxyethyl methacrylate and/or hydroxypropyl methacrylate in a total amount of from 5-15 wt.%,
c) methacrylic acid in amounts of from 0.5 to 10 wt.%, preferably 1-5 wt.%,
d) one or more components for improving impact strength, in particular comprising chlorosulfonated polyethylene and/or styrene-acrylonitrile-butadiene copolymer in a total amount of from 5 to 70 wt.%
e) a peroxide-based curing agent in a total amount of from 0.1 to 5 wt.%,
f) a catalytic component (or components) for catalyzing the curing reaction,
g) a stabilizer in a total amount of from 0.1 to 15 wt.%,
h) optionally a thickener, preferably fumed silica, the wt.% specifications being based on the total composition in each case.

13. The method or pipe connection according to claim 12,
**characterized in that** the total composition of the (meth)acrylate adhesive is subdivided into two components (a) and (b),
a first component (a), comprising:
(i) methyl methacrylate in amounts of from 20 to 60 wt.% based on component (a),
(ii) a peroxide-based curing component in a total amount of from 0.1 to 5 wt.% based on component (a),
(ii) a stabilizer in a total amount of from 0.1 to 5 wt.% based on component (a),
(iv)a component for improving impact strength (known as a "toughener") in a total amount of from 5 to 50 wt.% based on component (a),
(v) preferably a thickener in a total amount of from 0.5-20 wt.% based on component (a),
(vi) methacrylic acid in amounts of from 1-5 wt.% based on component (a), as well as a second component (b), comprising:
(i) methyl methacrylate in amounts of from 10 to 90 wt.% based on component (b),
(ii) a catalytic component for catalyzing the curing reaction, in a total amount of from 0.01 to 5 wt.% based on component (b),
(ii) a stabilizer in a total amount of from 0.1 to 5 wt.% based on component (b),
(iiv) a component for improving impact strength (known as a "toughener") in a total amount of from 5 to 50 wt.% based on component (b),
(v) preferably a thickener in a total amount of from 0.5-20 wt.% based on component (b).

## Revendications

1. Procédé de jonction, par liaison de matière, de tubes en matière plastique au moyen d'un raccord,
procédé dans lequel
(a) un adhésif est appliqué sur la surface de jonction du raccord et/ou sur les surfaces de jonction des extrémités de tube à relier audit raccord puis
(b) les tubes et le raccord sont assemblés puis
(c) l'adhésif est laissé à durcir,
**caractérisé en ce que** l'adhésif utilisé est un adhésif à deux composants (méth)acrylate, la totalité de l'adhésif à deux composant (méth)acrylate comprenant
(i) au moins trois composants monomères polymérisables différents à base de (méth)acrylate, comprenant
a) du méthacrylate de méthyle dans des quantités allant de 20 à 70 % en poids, sur la base de la composition totale,
b) du méthacrylate pourvu d'un groupe polaire choisi parmi le méthacrylate de cyclohexyle, le méthacrylate de tétrahydrofurfuryle, le méthacrylate d'hydroxyéthyle, le méthacrylate d'hydroxypropyle, le méthacrylate de t-butylaminoéthyle, le méthacrylate de cyanoéthyle, et le méthacrylate de chloroéthyle, mais en particulier le méthacrylate d'hydroxyéthyle et/ou le méthacrylate d'hydroxypropyle, dans des quantités allant de 5 à 30 % en poids, sur la base de toute la composition,
et
c) un composant monomère acide, en particulier l'acide méthacrylique, dans des quantités allant de 0,5 à 10 % en poids, sur la base de toute la composition.

2. Procédé de raccordement, par liaison de matière, de tubes en matière plastique, dans lequel
le raccordement de tube étant réalisé par assemblage d'une première extrémité de tube avec une deuxième extrémité de tube, la première extrémité de tube étant une partie de tube femelle et l'autre extrémité de tube étant une partie de tube mâle,
un adhésif étant appliqué sur au moins une des surfaces de jonction à raccorder l'une à l'autre avant d'assembler les extrémités de tube et l'adhésif étant laissé à durcir après le raccordement,
**caractérisé en ce que** l'adhésif utilisé est un adhésif à deux composants (méth)acrylate, la totalité de l'adhésif à deux composants (méth)acrylate comprenant
(i) au moins trois composants monomères polymérisables différents à base de (méth)acrylate, comprenant
a) du méthacrylate de méthyle dans des quantités allant de 20 à 70 % en poids, sur la base de la composition totale,
b) du méthacrylate pourvu d'un groupe polaire choisi parmi le méthacrylate de cyclohexyle, le méthacrylate de tétrahydrofurfuryle, le méthacrylate d'hydroxyéthyle, le méthacrylate d'hydroxypropyle, le méthacrylate de t-butylaminoéthyle, le méthacrylate de cyanoéthyle, et le méthacrylate de chloroéthyle, mais en particulier le méthacrylate d'hydroxyéthyle et/ou le méthacrylate d'hydroxypropyle, dans des quantités allant de 5 à 30 % en poids, sur la base de toute la composition,
et
c) un composant monomère acide, en particulier l'acide méthacrylique, dans des quantités allant de 0,5 à 10 % en poids, sur la base de toute la composition.

3. Procédé selon l'une des revendications 1 ou 2, **caractérisé en ce que** l'application de l'adhésif est effectuée par un outil d'application, notamment par application au pinceau.

4. Procédé selon l'une des revendications 1 à 3, **caractérisé en ce que** l'épaisseur de film d'adhésif sur la surface de jonction avant l'assemblage est dans la gamme de 0,1 mm à 3 mm, de préférence de 0,3 mm à 1,5 mm, en particulier 0,2 mm à 0,6 mm.

5. Procédé selon l'une des revendications 1 à 4, **caractérisé en ce que** l'assemblage du tube et du raccord ou d'un tube et d'un tube est effectué sans torsion.

6. Procédé selon l'une des revendications 1 à 5, **caractérisé en ce que** le tube en matière plastique est à base de matières thermoplastiques, en particulier à base de PVC, ABS, ASA, ABS/ASA ou PET.

7. Procédé selon l'une des revendications 1 à 6, **caractérisé en ce que** les pièces de jonction sont constituées de matières plastiques différentes.

8. Procédé selon l'une des revendications 1 à 7, **caractérisé en ce que** l'adhésif contient moins de 10 % en poids, de préférence moins de 5 % en poids, en particulier moins de 2 % en poids, de solvant.

9. Procédé selon l'une des revendications 1 à 8, dans lequel les tubes en matière plastique sont des tubes sous pression.

10. Procédé selon l'une des revendications 1 à 9, **caractérisé en ce que** le raccordement de tubes est utilisée pour les conduites d'eau potable, les conduites d'eau chaude et/ou le drainage sous pression.

11. Tube composite comprenant au moins deux tubes en matière plastique, avec ou sans insert de raccord entre les extrémités de tube, adapté à des conduites d'eau potable, des conduites d'eau chaude et/ou au drainage sous pression, **caractérisé en ce que** les surfaces de jonction des pièces de jonction raccordées entre elles sont fixées avec adhésif à deux composants (méth)acrylate et
la totalité de l'adhésif à deux composant (méth)acrylate comprenant
(i) au moins trois composants monomères polymérisables différents à base de (méth)acrylate, comprenant
a) du méthacrylate de méthyle dans des quantités allant de 20 à 70 % en poids, sur la base de la composition totale,
b) du méthacrylate pourvu d'un groupe polaire choisi parmi le méthacrylate de cyclohexyle, le méthacrylate de tétrahydrofurfuryle, le méthacrylate d'hydroxyéthyle, le méthacrylate d'hydroxypropyle, le méthacrylate de t-butylaminoéthyle, le méthacrylate de cyanoéthyle, et le méthacrylate de chloroéthyle, mais en particulier le méthacrylate d'hydroxyéthyle et/ou le méthacrylate d'hydroxypropyle, dans des quantités allant de 5 à 30 % en poids, sur la base de toute la composition,
et
c) un composant monomère acide, en particulier l'acide méthacrylique, dans des quantités allant de 0,5 à 10 % en poids, sur la base de toute la composition.

12. Procédé selon l'une des revendications 1 à 10 ou de raccordement de tubes selon la revendication 11, **caractérisé en ce que** l'adhésif à base de (méth)acrylate contient dans toute la composition
a) du méthacrylate de méthyle dans des quantités de 30 à 60 % en poids,
b) du méthacrylate d'hydroxyéthyle et/ou du méthacrylate d'hydroxypropyle dans une quantité totale de 5 à 15 % en poids,
c) de l'acide méthacrylique dans des quantités de 0,5 à 10 % en poids, de préférence de 1 à 5 % en poids,
d) au moins un composant destiné à améliorer la résistance au choc, comprenant en particulier du polyéthylène chlorosulfoné et/ou le copolymère styrène-acrylonitrile-butadiène, dans une quantité totale de 5 à 70 % en poids,
e) un agent durcissant à base de peroxyde dans une quantité totale de 0,1 à 5 % en poids,
f) au moins un composant catalytique destiné à catalyser la réaction de durcissement,
g) un stabilisant dans une quantité totale de 0,1 à 15 % en poids,
h) éventuellement un agent épaississant, de préférence des silices pyrogénées, le pourcentage en poids étant spécifié à chaque sur la base de la toute composition.

13. Procédé ou raccordement de tube selon la revendication 12,
**caractérisé en ce que** toue la composition de l'adhésif à base de (méth)acrylate est divisé en deux composants (a) et (b),
un premier composant (a) comprenant :
(i) du méthacrylate de méthyle dans des quantités de 20 à 60 % en poids, sur la base du composant (a),
(ii) un composant durcissant à base de peroxyde dans une quantité totale de 0,1 à 5 % en poids, sur la base du composant (a),
(iii) un agent stabilisant dans une quantité totale de 0,1 à 5 % en poids, sur la base du composant (a),
(iv) un composant destiné à améliorer la résistance au choc (que l'on appelle « toughener ») dans une quantité totale de 5 à 50 % en poids, sur la base du composant (a),
(v) de préférence un agent épaississant dans une quantité totale de 0,5 à 20 % en poids, sur la base du composant (a),
(vi) de l'acide méthacrylique dans des quantités de 1 à 5 % en poids, sur la base du composant (a), et un deuxième composant (b) comprenant :
(i) du méthacrylate de méthyle dans des quantités de 10 à 90 %, sur la base du composant (b),
(ii) un composant catalytique destiné à catalyser la réaction de durcissement dans une quantité totale de 0,01 à 5 % en poids, sur la base du composant (b),
(iii) un agent stabilisant dans une quantité totale de 0,1 à 5 % en poids, sur la base du composant (b),
(iv) un composant destiné à améliorer la résistance au choc (ce que l'on appelle « toughener ») dans une quantité totale de 5 à 50 % en poids, sur la base du composant (b),
(v) de préférence un agent épaississant dans une quantité totale de 0,5 à 20 % en poids, sur la base du composant (b).
